# EUROPEAN PATENT SPECIFICATION

(11) **EP 2 534 762 B1**
(45) Date of publication and mention of the grant of the patent: **27.10.2021**
(21) Application number: 11742412.7
(22) Date of filing: 31.01.2011
(51) Int. Cl.: H04B 1/40, G06F 1/16, G06F 3/0486, G06F 3/0488

(54) **MOBILE DEVICE WITH DUAL DISPLAY UNITS AND METHOD FOR PROVIDING A CLIPBOARD FUNCTION USING THE DUAL DISPLAY UNITS**
MOBILE VORRICHTUNG MIT ZWEI ANZEIGEEINHEITEN UND VERFAHREN ZUR BEREITSTELLUNG EINER ZWISCHENABLAGEFUNKTION MITHILFE DER ZWEI ANZEIGEEINHEITEN
DISPOSITIF MOBILE À DEUX UNITÉS D'AFFICHAGE ET PROCÉDÉ POUR FOURNIR UNE FONCTION PRESSE-PAPIER À L'AIDE DES DEUX UNITÉS D'AFFICHAGE

(30) Priority: 10.02.2010 KR 20100012534
(43) Date of publication of application: 19.12.2012
(73) Proprietor: Samsung Electronics Co., Ltd., Suwon-si, Gyeonggi-do, 443-742 (KR)
(72) Inventor: LEE, Hyung Min, Gyeonggi-do 443-742 (KR); LEE, Myeong Lo, Gyeonggi-do 443-742 (KR)
(74) Representative: Nederlandsch Octrooibureau
(86) International application number: PCT/KR2011/000665
(87) International publication number: WO 2011/099720

(56) References cited:
- EP-A2- 2 480 963
- KR-A- 20090 057 609
- KR-B1- 100 438 578
- KR-B1- 100 784 263
- US-A- 5 404 442
- US-A- 5 657 049
- US-A1- 2004 150 671
- US-A1- 2009 098 910
- US-B1- 6 331 840
- US-B1- 6 545 669
- None

## Description

### [Technical Field]

This present invention relates to mobile electronic systems. The present invention further relates to a mobile device with a dual display unit. More particularly, the present invention relates to a mobile device with dual display units that allow two regions, respectively allocated to the dual display units, near a boundary between the dual display units, to serve as a clipboard area and for providing a clipboard function to the mobile device using the dual display units. The present invention further relates to a method for executing a clipboard function on a mobile device with a dual display unit.

### [Background Art]

With recent developments of information communication technology and semiconductor technology, various types of mobile devices have been developed and the number of mobile device users has increased accordingly. Mobile devices utilize mobile convergence to additional service functions provided by other types of mobile systems, as well as their traditional service functions. For example, a mobile communication device can include multi-media functions as well as its communication function, such as a voice call, and message transmission and reception. Examples of the multi-media functions include a Television (TV) viewing function (e.g., mobile broadcasting, such as a Digital Multimedia Broadcasting (DMB), a Digital Video Broadcasting (DVB)), an audio playback function (e.g., MPEG Audio Layer 3 (MP3)), a photographing function, an Internet access function, a dictionary browsing function, and the like.

The mobile devices output stored information, information transmitted from externals systems, user's input information, and the like, on their display units. Since the display units only allow for users' most frequently used interface, the display units are connected directly with the users' evaluation for the mobile devices. In addition, as the mobile devices are implemented with the multi-media functions, an Internet function, and a clipboard function, the importance of the display units gradually increases.

EP 2 480 963 A2 discloses a visual clipboard system and method, in which drag- and-release operations are employed to move copies of a displayed object onto and off of a predefined clipboard area.

US 6 331 840 B1 discloses a pointing implement contacts the source touchscreen to select the object, storing parameters in the computers butfer. The pointing implement is moved to the target touch-screen where the pointing implement contacts where the first object is to be dragged to; then the object is released from the buffer so that the first object is pasted to the target touch-screen.

US 5 404 442 A discloses a "visual clipboard" which is attached to a boundary of the screen. The visible clipboard is implemented on a pen-based computer system.

US 2009/098910 A1 discloses a mobile terminal that includes a display unit to display one or more content on a screen and a storage box positioned on the screen for storing at least one of the one or more content dragged on the screen.

US 5 657 049 A discloses a display oriented software user interface for the generation and display of a secondary display region within a primary display region of a computer controlled information management system.

### [Disclosure of Invention]

### [Technical Problem]

An aspect of the present invention is to address at least the above mentioned problems and/or disadvantages and to provide at least the advantages described below. Accordingly, an aspect of the present invention is to provide a mobile device that includes dual display units installed inside the main body and provides a clipboard function.

Another aspect of the present invention is to provide a mobile device with dual display units, where a clipboard environment is implemented in two sizes of regions that are allocated to the dual display units, near a boundary between the dual display units.

A further aspect of the present invention is to provide a method for providing an intuitive clipboard function to a mobile device with dual display units, using two sizes of regions that are allocated to the dual display units, near a boundary between the dual display units.

Still another aspect of the present invention is to provide technology to enhance the convenience of a clipboard function in a mobile device with dual display units.

### [Solution to Problem]

Aspects of the invention are disclosed in the independent claims. The dependent claims define advantageous embodiments.

In accordance with an aspect of the present invention, a method for executing a clipboard function on a mobile device is provided. The method includes displaying screen images on at least one of a first display unit and a second display unit according to an execution of an application, displaying a clipboard area on the first display unit and the second display unit according to an execution of the clipboard function, where the clipboard area includes regions allocated to the first display unit and the second display unit, respectively, and controlling one of the registration and the addition of an object on the first display unit or the second display unit in which a clipboard event occurs.

In accordance with another aspect of the present invention, a mobile device with a dual display unit is provided. The device includes a first display unit for displaying a screen image and providing a region forming a first part of a clipboard area when a clipboard function is executed, wherein the first display unit is installed on a first body of the mobile device, a second display unit for displaying a screen image and providing a region forming a second part of the clipboard area when a clipboard function is executed, wherein the second display unit is installed on a second body of the mobile device, a storage unit for storing an object according to the execution of the clipboard function, and a controller for one of registering and adding an object on the first display unit or the second display unit in which a clipboard event occurs.

Other aspects, advantages, and salient features of the invention will become apparent to those skilled in the art from the following detailed description, which, taken in conjunction with the annexed drawings, discloses exemplary embodiments of the invention.

### [Advantageous Effects of Invention]

As described above, the mobile device according to exemplary embodiments of the present invention can provide a clipboard function via dual display units. The method adapted to the mobile device can provide a clipboard function using the dual display units. The dual display units have the regions of a certain size each, and the regions are located near a boundary between dual display units. The method can provide an optimal environment to the mobile device, so that the mobile device can allow the dual display units to share objects (or data). The method can perform a variety of clipboard functions according to the user's selection. Since one object (or data) can be split and displayed on one overall screen formed by two display units, the user can easily access the object (or data) on the two display units respectively. Therefore, the method can extend the clipboard function and increase its visualization in the mobile device, so that the mobile device can be widely used.

### [Brief Description of Drawings]

The above and other aspects, features, and advantages of certain exemplary embodiments of the present invention will be more apparent from the following description taken in conjunction with the accompanying drawings, in which:
FIG. 1 illustrates a schematic block diagram of a mobile device with dual display units according to an exemplary embodiment of the present invention;
FIG. 2 illustrates a front side and inside of a mobile device with dual display units according to an exemplary embodiment of the present invention;
FIGs. 3 and 4 illustrate screens describing a method for providing a clipboard function using dual display units of a mobile device, according to an exemplary embodiment of the present invention;
FIG. 5 illustrates screens describing a method for providing a clipboard function in a portrait mode using dual display units of a mobile device, according to an exemplary embodiment of the present invention;
FIGs. 6 and 7 illustrate screens describing operations in a clipboard area, according to an exemplary embodiment of the present invention;
FIGs. 8 to 10 illustrate screens describing a method for providing a clipboard function using dual display units of a mobile device, according to an exemplary embodiment of the present invention;
FIG. 11 illustrates screens describing operations of a clipboard function using dual display units of a mobile device, according to an exemplary embodiment of the present invention; and
FIG. 12 illustrates a flowchart describing a method for controlling a clipboard function using the dual display units of a mobile device, according to an exemplary embodiment of the present invention.

Throughout the drawings, it should be noted that like reference numbers are used to depict the same or similar elements, features, and structures.

### [Mode for the Invention]

The following description with reference to the accompanying drawings is provided to assist in a comprehensive understanding of exemplary embodiments of the invention as defined by the claims.

It includes various specific details to assist in that understanding but these are to be regarded as merely exemplary. Accordingly, those of ordinary skill in the art will recognize that various changes and modifications of the embodiments described herein can be made without departing from the scope of the invention, as defined by the appended claims. In addition, descriptions of well-known functions and constructions may be omitted for clarity and conciseness.

The terms or words used in the following description and the claims are not be limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a mobile device with dual display units and method for providing a clipboard function using the dual display units. For convenience of description, it is assumed that the dual display units are called a first display unit and a second display unit. The first display unit and the second display unit are pivotally mounted to the mobile device so that they can be arranged side by side when they are unfolded with respect to their one edge (or axis). In this case, two regions, allocated to the first display unit and the second display unit respectively, near the boundary between the first display unit and the second display unit, can serve as a clipboard area. The user can select an object (or data) on the first display unit or the second display unit and then move it to a corresponding allocated region, thereby registering (or copying) it in the clipboard area. In addition, the user can also move an object (or data), registered (copied) in the clipboard area, from the clipboard area to the first display unit or the second display unit, thereby adding it to an application that is currently executed.

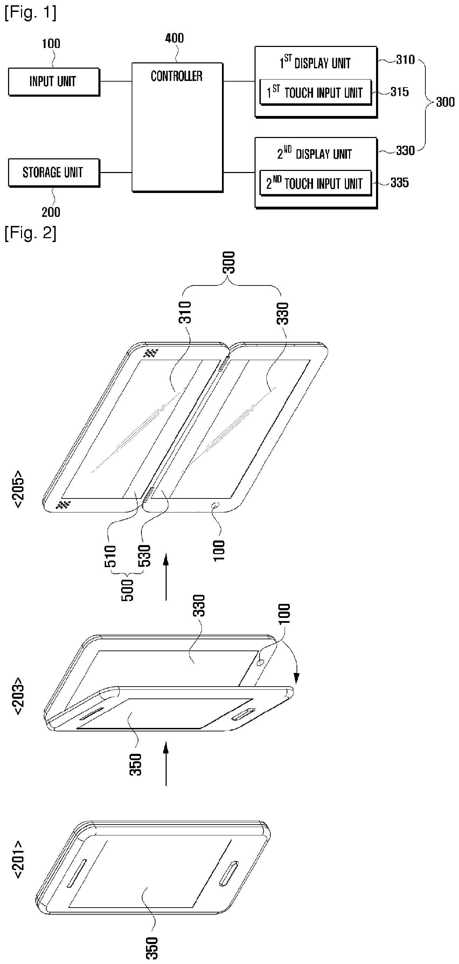

Configurations and operations of the mobile device according to exemplary embodiments of the present invention are described in more detail with reference to FIGs. 1 to 12. It should be understood that the present invention is not limited thereto. It should be noted that there may be many modifications to the configurations and the operations.

FIG. 1 illustrates a schematic block diagram of a mobile device with dual display units according to an exemplary embodiment of the present invention.

Referring to FIG. 1, the mobile device includes an input unit 100, a storage unit 200, a display unit 300, and a controller 400.

It should be noted that the mobile device may further include a Radio Frequency (RF) unit for communicating with other external systems, an audio processing unit including a microphone and a speaker, a digital broadcasting module for receiving and reproducing digital broadcasts (e.g., a Digital Multimedia Broadcast (DMB), a Digital Video Broadcast (DVB), and the like), a camera module for taking photographs, a Bluetooth communication module for performing Bluetooth communication, an Internet communication module for performing internet communication, and the like.

The input unit 100 detects a user's input, creates an input signal corresponding thereto, and transfers it to the controller 400. The input unit 100 includes an outside input unit installed on an outer side of the mobile device, an inside input unit installed on an inner side of the mobile device, and a side input unit installed on the side of the mobile device. The input unit 100 may include a number of buttons. In an exemplary embodiment of the present invention, the input unit 100 may include at least one or more buttons that create input signals for opening or closing a clipboard area.

The storage unit 200 stores data and programs that are executed in the mobile device. The storage unit 200 may be implemented with at least one or more volatile or non-volatile memory devices. The storage unit 200 can permanently or temporarily store an operating system for the mobile device, data and programs for controlling the display operations of the display unit 300, data and applications related to the execution of a clipboard function. The storage unit 200 can further include a storage area (not illustrated) that permanently or temporarily stores objects (or data) registered (i.e., copied) according to the execution of a clipboard function.

The display unit 300 is implemented with dual display units that correspond to a first display unit 310 and a second display unit 330. In an exemplary embodiment of the present invention, the display unit 300 may further include a front display unit 350 installed on the front side of the mobile device, which will be described later. The first display unit 310 and the second display unit 330 are located inside the mobile device, with respect to the front display unit 350. The display unit 300 may be implemented with a Liquid Crystal Display (LCD), an Organic Light Emitting Diode (OLED), an Active Matrix OLED (AMOLED), and the like.

The mobile device can associate the first and second display unit 310 and 330 with each other to serve as one larger overall screen, and then display one screen image according to the execution of an application thereon. Alternatively, the mobile device can independently operate the first and second display units 310 and 330 and display the same one screen image or two different screen images according to the execution of two different applications thereon, respectively.

The first and second display units 310 and 330 may each include first and second touch input units 315 and 335, respectively. The first and second display units 310 and 330 may be implemented with a touch screen, respectively. In an exemplary embodiment of the present invention, it is assumed that the first display unit 310 is installed on a first body of the main body of the mobile device, and the second display unit 330 is installed on a second body of the main body. The first body and the second body are coupled to each other so that they can be rotated with respect to their one edge portion. Alternatively, the first body is split and slid from the second body and then coupled to each other via their edges. In an exemplary embodiment of the present invention, a certain size of region in the first display unit 310 and a certain size of region in the first display unit 330 form one overall clipboard area.

The controller 400 controls operations of the mobile device. The controller 400 is implemented with one or two microprocessor chips. When the controller 400 is implemented with two microprocessor chips, one of the microprocessor chips may serve as a dedicated chip for controlling the first display unit 310 or the second display 330. More particularly, the controller 400 manages certain sizes of regions in the first and second display units 310 and 330 as one clipboard area. The controller 400 controls the clipboard function by registering (i.e., copying) or adding (i.e., pasting) an object (or data) in or to the region in the first display unit 310 or second display unit 330, where a clipboard event occurs. Examples of the clipboard event include a registration event and an addition event.

When the user gestures to move an object (or data) from a screen area of the first display unit 310 (or second display unit 330) displaying a screen image to the region of the first display unit 310 (or second display unit 330) forming the clipboard area, the controller 400 processes the movement gesture as a registration event. Thereafter, the controller 400 stores the selected object (or data) in a storage area allocated to the storage unit 200, required when a clipboard function is performed, and also registers (copies) the item corresponding to the selected object (or data) in the clipboard area formed by the regions of the first and second display unit 310 and 330, thereby displaying the item on the clipboard area. In addition, the controller 400 can display the item on the first and second display units 310 and 330, by extending it over the boundary between them.

Likewise, when the user gestures to move an item from the clipboard area of the first display unit 310 (or second display unit 330) to the screen area of the first display unit 310 (or second display unit 330) displaying a screen image, the controller 400 processes the movement gesture as an addition event. The controller 400 loads the object (or data) corresponding to the selected item from the storage area allocated to the storage unit 200, required when a clipboard function is performed, and then adds (i.e., pastes) it to the first display unit 310 (or second display unit 330).

The controller 400 controls an addition (i.e., pasting) function for an object (or data) according to the types of objects (or data). For example, when the object corresponding to an item selected according to an addition event is a text such as a string, the controller 400 adds (i.e., pastes) the string as a text to the screen image. In addition, when the object corresponding to an item selected according to an addition event is data such as a content file, the controller 400 adds (i.e., pastes) the content file to the screen image or adds the object to an executed application.

The controller 400 may also control a variety of functions according to the execution of applications and various operations related to the clipboard function.

FIG. 2 illustrates a front side and inside of a mobile device with dual display units according to an exemplary embodiment of the present invention.

Referring to FIG. 2, diagram 201 illustrates a perspective view of the front side of the mobile device. Diagram 203 illustrates a perspective view when a top body and a bottom body of the mobile device are slightly open. Diagram 205 illustrates a perspective view of the inside of the mobile device when it is completely open.

As described above, the mobile device includes a first display unit 310 and a second display unit 330 inside the main body and a display unit 350 on the front side. In an exemplary implementation, the mobile device may be implemented in such a way that the display unit 350 is not installed on the front side of the main body. The display units 310, 330 and 350 may be implemented with an LCD, an OLED, an AMOLED, and the like. As illustrated in diagram 205, the display unit 310 is installed inside the first body of the main body of the mobile device and, hereinafter, called a first display unit 310. Likewise, the display unit 330 is installed on the second body of the main body and, hereinafter, called a second display unit 330. It should be understood, for convenience of description, that the main body of the mobile device is divided into the first body and the second body and, correspondingly, the display unit is divided into the first and second display units 310 and 330. In the following description, the first and second display units 310 and 330 are commonly called dual display units 310, 330.

The dual display units 310, 330 display screens when applications are executed in the mobile device. Examples of the applications are related to functions, such as, a message transmission-reception, E-mail, the Internet, multimedia, a search, communication, E-book reading, a motion picture, photographing, an image view, a Television (TV) view (e.g., mobile broadcasts such as DMB, DVB, and the like), an audio file playback (e.g., MP3 file), and the like. The front display unit 350 displays a screen when a general function, such as communication, is executed. The display units 310, 330 and 350 can display screen images in a portrait mode or a landscape mode.

More particularly, a clipboard area 500 according to an exemplary embodiment of the present invention is formed by two regions of the dual display units 310, 330, each of which has a certain size, near the boundary between the first body and the second body of the dual display units 310, 330. For example, when the mobile device operates the dual display units 310, 330 in landscape mode, the clipboard area 500 includes a certain size of region 510 located at the bottom portion of the first display unit 310 and a certain size of region 530 located at the top portion of the second display unit 330. Likewise, when the mobile device operates the dual display units 310, 330 in portrait mode, the clipboard area 500 includes a certain size of region 510 located at the right portion of the first display unit 310 and a certain size of region 530 located at the left portion of the second display unit 330. Therefore, the dual display units 310, 330 form a clipboard area 500 by the regions 510 and 530 near the boundary between the first and second display unit 330 and perform a clipboard function thereon.

Therefore, the mobile device user can select one of the objects (or data), provided by applications, on the screen area in the first display unit 310 or the second display unit 330, and locates it in the clipboard area 500. In this case, the controller 400 stores the object (or data), located in the clipboard area 500, in the storage unit 200, and also displays it on the clipboard area 500. More particularly, since the clipboard area 500 is comprised of the regions 510 and 530 and serves as one larger overall clipboard screen, the object (or data) may be displayed as being split by the boundary between the regions 510 and 530. In addition, the user can select an object (or data) on the region 510 or 530, thereby performing a clipboard function.

Although it is not illustrated in FIG. 2, the mobile device may include a speaker, a microphone, a camera module, and the like, on the front or inside thereof. As illustrated in FIG. 2, although the mobile device is configured in such a way that the input unit 100 is installed inside the body, the input unit 100 may also be installed on the front side. In addition, it should be understood that that the mobile device may be configured to include a number of input buttons, as the input unit, installed on the side of the mobile device.

The main body of the mobile device is comprised of the first body with the first display unit 310 and the second body with the second display unit 330, which can be unfolded as they are rotated with respect to their one edge. According to the types of mobile devices, their main body parts are operated in such a way that the first body and the second body are split and slid in the upper and down directions and then the first body is coupled to the second body.

As described above, the mobile device is implemented to include dual display units which correspond to the first and second display units 310 and 330 respectively. More particularly, the first and second display units 310 and 330 have a certain size of region, respectively, so that the regions form a clipboard area to perform a clipboard function. The method for controlling a clipboard function on the dual display units will be described below in more detail.

The mobile device as illustrated in FIGs. 1 and 2 may be applied to all types of mobile devices, for example, a bar type, a folder type, a slide type, a swing type, a flip-flop type, and the like. The mobile device with dual display units installed on the inside may include all information communication devices, multimedia devices, and their applications, which are operated according to communication protocols corresponding to a variety of communication systems. For example, the mobile device may be applied to mobile communication terminals, Portable Multimedia Players (PMPs), digital broadcast players, Personal Digital Assistants (PDAs), audio players (e.g., MP3 players), mobile game players, smart phones, and the like. In addition, the method for displaying screen data on the dual display unit of the mobile device, according to exemplary embodiments of the present invention, may be adapted to TVs, Large Format Displays (LFDs), Digital Signages (DSs), media poles, personal computers, laptop computers, and the like.

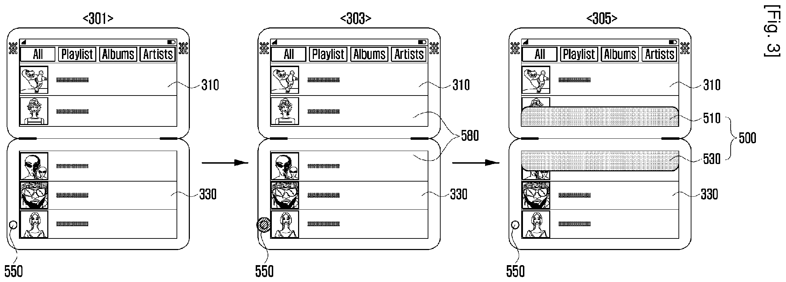

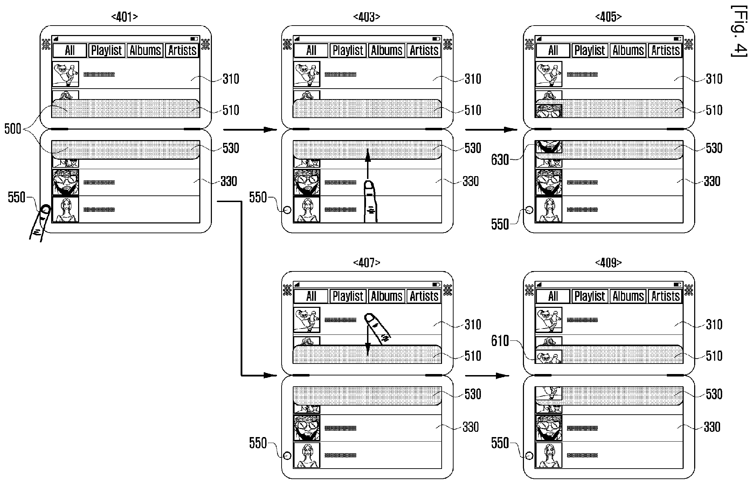

FIGs. 3 and 4 illustrate screens describing a method for providing a clipboard function using dual display units of a mobile device, according to an exemplary embodiment of the present invention.

Referring to FIG. 3, as illustrated in diagram 301, the first and second display units 310 and 330, serving as one larger overall screen, display a screen image (e.g., a content list) according to the execution of an application. The mobile device may perform a clipboard function according to a preset mode as illustrated in diagram 303. Executing a clipboard function can be conducted by operating a shortcut key button 550 of the input unit 100, installed on the main body, or by touching a touch area 580 on the first display unit 310 or the second display unit 330.

When the shortcut key button 550 is operated or the touch area 580 is touched in order to perform a clipboard function, the dual display units 310, 330 display the regions 510 and 530 respectively as illustrated in diagram 305. That is, the region 510 of the first display unit 310 and the region 530 of the second display unit 330 associate with each other to serve as one overall clipboard area 500. The regions 510 and 530 forming the clipboard area 500 are displayed on the screen images on the dual display units 310, 330 respectively.

Referring to FIG. 4, when the clipboard area 500 is displayed on the dual display units 310, 330 as illustrated in diagram 401, the user can input gestures to perform a clipboard function. For example, as illustrated in diagram 403, the user gestures to select (e.g., to touch, to hold, and the like) an object (or data) on the second display unit 330 and then also inputs a movement gesture (e.g., a movement, a drag, a flick, and the like) to move it from the screen area of the second display unit 330 to the region 530 serving as a part of the clipboard area 500.

When the selected object (or data) is moved to the region 530, an item 630 corresponding to the selected object (or data) is split and displayed on the regions 510 and 530 of the clipboard area 500 as illustrated in diagram 405. The real object (or data) of the item 630, located in the clipboard area 500, is stored in the storage unit 200. That is, the controller 400 stores the object (or data) corresponding to the item 630, located in the clipboard area 500, i.e., the user's selected object (or data), in a storage area for a clipboard function, allocated to the storage unit 200.

Likewise, the user may also locate an object (or data) from the first display unit 310 to the clipboard area 500. For example, as illustrated in diagram 407, the user gestures to select (e.g., to touch, to hold, and the like) an object (or data) on the first display unit 310 and then also inputs a movement gesture (e.g., a movement, a drag, a flick, and the like) to move it from the screen area of the first display unit 310 to the region 510 serving as a part of the clipboard area 500.

When the selected object (or data) is moved to the region 510, an item 610 corresponding to the selected object (or data) is split and displayed on the regions 510 and 530 of the clipboard area 500 as illustrated in diagram 409. The real object (or data) of the item 610, located in the clipboard area 500, is stored in the storage unit 200. That is, the controller 400 stores the object (or data) corresponding to the item 610, located in the clipboard area 500, i.e., the user's selected object (or data), in a storage area for a clipboard function, allocated to the storage unit 200.

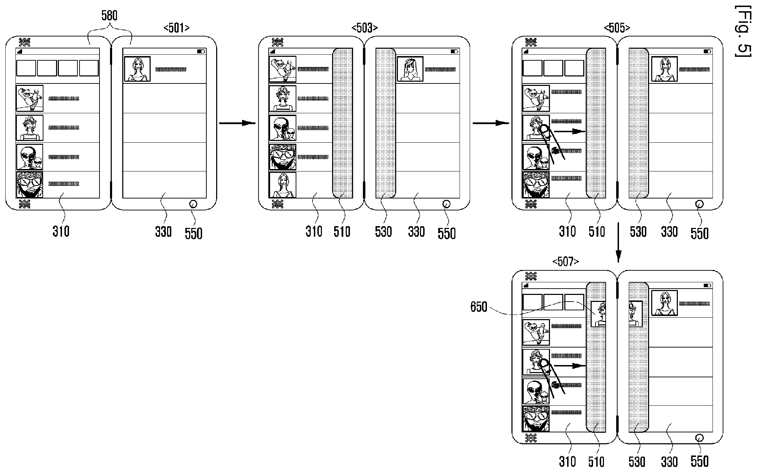

FIG. 5 illustrates screens describing a method for providing a clipboard function in a portrait mode using dual display units of a mobile device, according to an exemplary embodiment of the present invention.

Referring to FIG. 5, as illustrated in diagram 501, the first and second display units 310 and 330 display a screen image (e.g., a content list screen image) according to the execution of an application in portrait mode. As described above, the mobile device may perform a clipboard function according to a preset mode. For example, executing a clipboard function can be conducted by operating a shortcut key button 550 of the input unit 100, installed on the main body, or by touching a touch area 580 on the first 310 or second 330 display unit.

When the shortcut key button 550 is operated or the touch area 580 is touched in order to perform a clipboard function, the dual display units 310, 330 display the regions 510 and 530 respectively as illustrated in diagram 503. That is, the region 510 of the first display unit 310 and the region 530 of the second display unit 330 associate with each other to serve as one overall clipboard area 500. The regions 510 and 530 forming the clipboard area 500 are displayed on the screen images on the dual display units 310, 330 respectively.

When the clipboard area 500 is displayed on the dual display units 310, 330 as illustrated in diagram 503, the user may input gestures to perform a clipboard function as illustrated in diagram 505. For example, the user gestures to select a real object (or data) on the screen area of the first display unit 310 and then also inputs a movement gesture to move it from the screen area to the region 510 serving as a part of the clipboard area 500. When the selected object (or data) is moved to the region 510, an item 650 corresponding to the selected object (or data) is split and displayed on the regions 510 and 530 of the clipboard area 500 as illustrated in diagram 507. The real object (or data) of the item 650, located in the clipboard area 500, is stored in the storage unit 200. Although, to locate an object (or data) from the screen area of the second display unit 330 to the clipboard area 500 is not described, it should be understood that its process can be performed in the same manner as that in the first display unit 310 as described above.

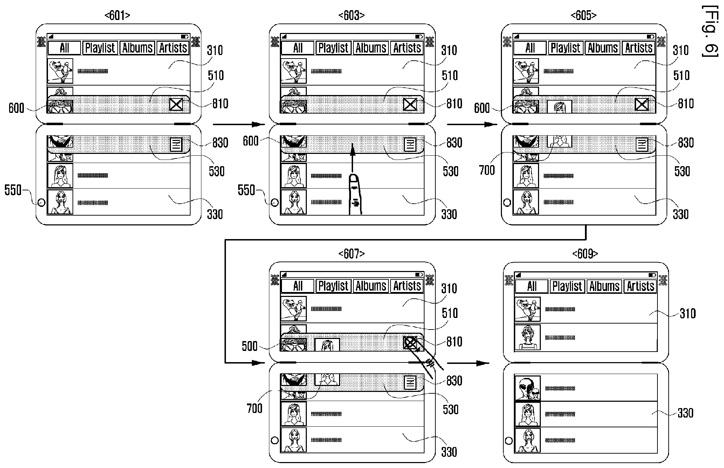

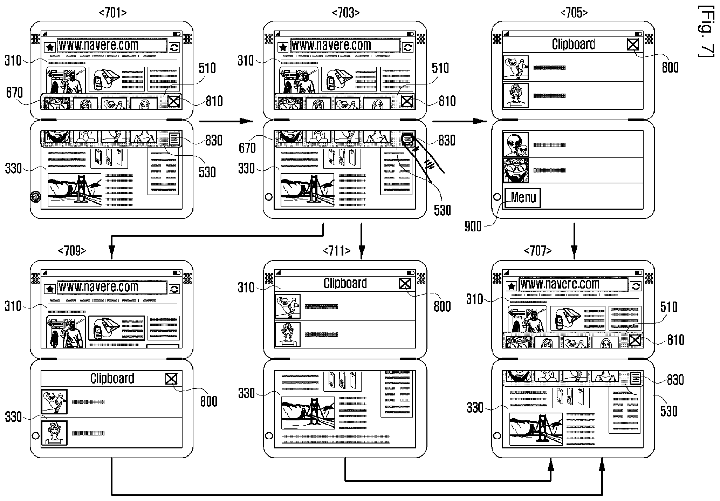

FIGs. 6 and 7 illustrate screens describing operations in a clipboard area, according to an exemplary embodiment of the present invention.

Referring to FIG. 6, as illustrated in diagram 601, it is assumed that a first item 600 of a first object (or data) is registered in the clipboard area 500. The clipboard area 500 includes a list viewing soft key button that can open a list of items, registered in the clipboard 500, on at least one of the region 510 of the first display unit 310 and the region 530 of the second display unit 330. Likewise, the clipboard area 500 also includes a closing soft key button that can close the clipboard 500 that was open to at least one of the regions 510 and 530. In an exemplary embodiment of the present invention, as illustrated in diagram 601, the region 510 of the first display unit 310 includes a closing soft key button 810 and the region 530 of the second display unit 330 includes a list viewing soft key button 830.

When the mobile device displays the first item 600 on the clipboard are 500 and screen images on the first and second display units 310 and 330 as illustrated in diagram 601, it can register a second item 700 of the second object (or data) in the clipboard 500 as illustrated in diagrams 603 and 605. In an exemplary embodiment of the present invention, it should be understood that objects and items are numbered with ordinal numbers, first and second, for convenience of description. In this case, a first object and a second object differ from each other, and the first item 600 and the second item 700 also differ from each other.

The user can register the first item 600 of the first object (or data) in the clipboard area 500 of the dual display units 310, 330 as illustrated in diagram 601. Thereafter, the user selects the second object (or data) on the screen area of the second display unit 330, and then gestures to move it from the screen area to the region 530 serving as a part of the clipboard area 500 as illustrated in diagram 603.

When the selected second object (or data) is moved to the region 530, the second item 700 corresponding to the second object (or data) is split and displayed on the regions 510 and 530 of the clipboard area 500 as illustrated in diagram 605. In this case, the clipboard area 500 retains the first item 600 that was previously registered and newly registers the second item 700 therein. The real second object (or data) of the second item 700 that currently registered in the clipboard area 500 is stored in the storage unit 200. That is, the controller 400 stores the first object (or data) corresponding to the first item 600, registered in the clipboard area 500, and the second object (or data) corresponding to the second item 700, in a storage area for a clipboard function, allocated to the storage unit 200.

When the mobile device is operated as illustrated in diagram 605, it can close the clipboard area 500 according to a preset mode. For example, closing a clipboard can be conducted by operating a shortcut key button 550 of the input unit 100, installed on the main body, or by touching the closing soft key button 810 on the region 510 of the first display unit 310. In the following description, the clipboard area 500 is closed by touching the closing soft key button 810.

When the closing soft key button 810 is touched on the region 510 as illustrated in diagram 607, the clipboard area 500 is closed. In this case, the regions 510 and 530 are closed, i.e., hidden, from the first and second display units 310 and 330, as illustrated in diagram 609.

Referring to FIG. 7, as illustrated in diagram 701, dual display units 310, 330 display a clipboard area 500 on which a number of items 670 was registered. The items 670 may be displayed in a list according to a preset method. For example, displaying a list of items 670 on the clipboard area 500 can be conducted by operating a shortcut key button (not illustrated) of the input unit 100, installed on the main body, or by touching the list viewing soft key button 830 on the region 530 of the second display unit 330. It is assumed herein that the list viewing function is performed by touching the list viewing soft key button 830.

When the list viewing soft key button 830 is operated on the region 530 of the second display unit 330 as illustrated in diagram 703, the first and second display units 310 and 330 display a screen image for a list of items 670 registered in the clipboard area 500 as illustrated in diagram 705. The screen image for a list of items 670 may be displayed in three modes according to settings. One mode is a case where the first and second display units 310 and 330 associate with each other to serve as one larger overall screen and display the screen image for a list of items 670 thereon. Another mode is a case where the first display unit 310 displays the screen image for a list of items 670. The other mode is a case where the second display unit 330 displays a list of items 670 as a pop-up window.

When the list viewing soft key button 830 is operated as illustrated in diagram 703, the first and second display units 310 and 330 associate with each other to serve as one larger overall screen and display the screen image for a list of items 670, i.e., a list view screen image, thereon. The list view screen image may further include a closing soft key button 800, a menu soft key button 900, and the like. When the mobile device operates as illustrated in diagram 705, the user can select a variety of options related to the items 670 to perform a clipboard function using the menu soft key button 900. Examples of the options are to alter the order of items 670 in the list, to delete the items 670 selectively or collectively, to change the names of the items 670, to set the long-term storage option, to copy or move, and the like. After setting the option, the user can close the list view screen image by operating the closing soft key button 800. When the closing soft key button 800 is operated, the first and second display units 310 and 330 remove the list view screen image and then display the clipboard area 500 and the screen image that was previously displayed, as illustrated in diagram 707. The clipboard area 500 may be displayed according to the settings.

When the list viewing soft key button 830 is operated as illustrated in diagram 709, the second display unit 330 displays a list view screen image and the first display unit 310 continues to display a screen image that has been displayed. In this case, the region 510 may not be displayed on the first display unit 310. The list view screen image of the second display unit 330 may further include a closing soft key button 800, a menu soft key button 900, and the like. When the mobile device operates as illustrated in diagram 709, the user can select the options using the menu soft key button 900, and can close the list view screen image by operating the closing soft key button 800. When the closing soft key button 800 is operated, the second display unit 330 removes the list view screen image and then displays the clipboard area 500 and the screen image that was previously displayed, as illustrated in diagram 707. The clipboard area 500 may be displayed according to the settings.

Likewise, when the list viewing soft key button 830 is operated as illustrated in diagram 711, the first display unit 310 displays a list view screen image and the second display unit 330 continues to display a screen image that has been displayed. In this case, the region 530 may not be displayed on the second display unit 330. The list view screen image of the first display unit 310 may further include a closing soft key button 800, a menu soft key button 900, and the like. When the mobile device operates as illustrated in diagram 711, the user can select the options using the menu soft key button 900, and can close the list view screen image by operating the closing soft key button 800. When the closing soft key button 800 is operated, the first display unit 310 removes the list view screen image and then displays the clipboard area 500 and the screen image that was previously displayed, as illustrated in diagram 707. The clipboard area 500 may be displayed according to the settings.

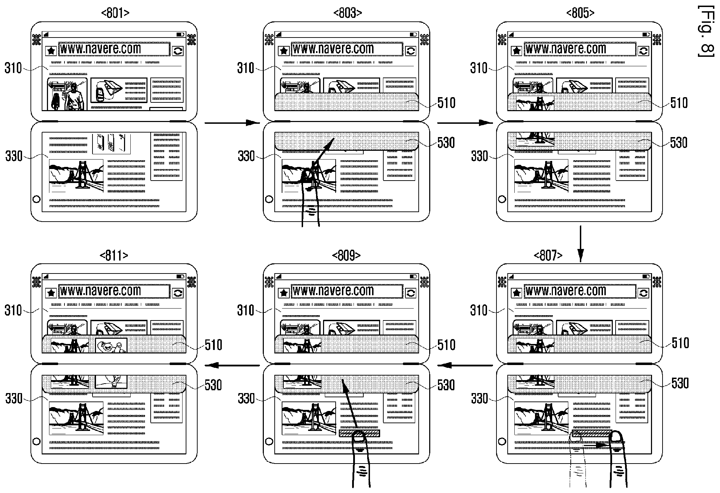

FIG. 8 illustrates screens describing a method for providing a clipboard function in a landscape mode using dual display units of a mobile device, according to an exemplary embodiment of the present invention.

Referring to FIG. 8, as illustrated in diagram 801, it is assumed that a screen image according to the execution of an application, for example, a screen image connected to the Internet via a preset service provider's browser, is displayed on the first and second display units 310 and 330 in a landscape mode. In addition, the mobile device may perform a clipboard function according to a preset mode. When an input for executing a clipboard function occurs, the dual display units 310, 330 display the regions 510 and 530 respectively as illustrated in diagram 803. That is, the region 510 of the first display unit 310 and the region 530 of the second display unit 330 associate with each other to serve as one overall clipboard area 500.

When the clipboard area 500 is displayed on the dual display units 310, 330, the user can input gestures to perform a clipboard function as illustrated in diagram 803. For example, the user gestures to select an object (or data) on the screen area of the second display unit 330 and then also inputs a movement gesture to move it from the screen area to the region 530 serving as a part of the clipboard area 500. When the selected object (or data) is moved to the region 530, an item corresponding to the selected object (or data) is split and displayed on the regions 510 and 530 of the clipboard area 500 as illustrated in diagram 8005.

In addition, the mobile device user can select one or more from the objects (or data) displayed on the first and second display units 310 and 330, and register them in the clipboard area 500. As illustrated in diagram 807, the user can input a gesture to select a number of objects (or data) displayed on the screen image of the second display unit 330. For example, the user can input a drag gesture to designate a string with a block. In this case, the string may be designated by the block as illustrated in diagram 809.

Thereafter, the user gestures to move the designated object (i.e., string) from the screen area to the region 530. When the designated object (i.e., string) is moved to the region 530, an item corresponding to the designated object (i.e., string) is split and displayed on the regions 510 and 530 of the clipboard area 500 as illustrated in diagram 811.

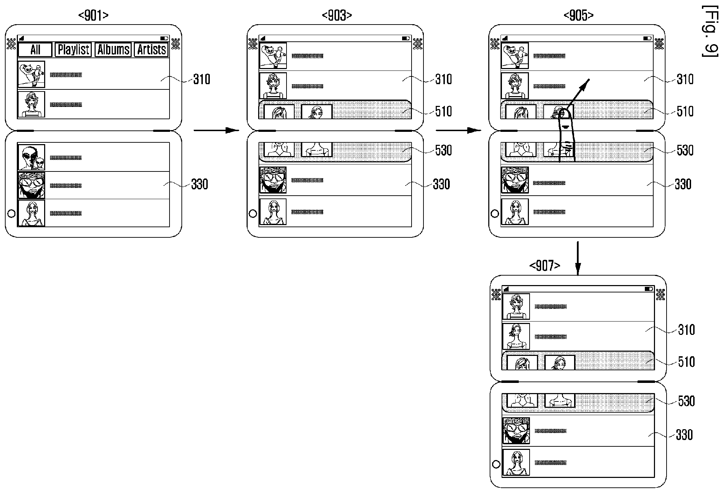

FIG. 9 illustrates screens describing a method for providing a clipboard function in a landscape mode using dual display units of a mobile device, according to an exemplary embodiment of the present invention.

Referring to FIG. 9, as illustrated in diagram 901, the first and second display units 310 and 330 display a screen image (e.g., a content list screen image) according to the execution of an application in a landscape mode. In addition, the mobile device may perform a clipboard function according to a preset mode. When an input for executing a clipboard function occurs, the dual display units 310, 330 display the regions 510 and 530 respectively as illustrated in diagram 903. That is, the region 510 of the first display unit 310 and the region 530 of the second display unit 330 associate with each other to serve as one overall clipboard area 500. In this case, it is assumed that an item corresponding to at least one object (or data) is registered (or copied) in the clipboard area 500.

When the mobile device operates as illustrated in diagram 903, the user can input a gesture for adding (i.e., pasting) an object (or data) corresponding to an item in the clipboard area 500 to a screen image (or an application) that is currently executed. For example, as illustrated in diagram 905, the user selects an item on the region 510 of the first display unit 310 and gestures to move it to the screen area on the first display unit 310. When the selected item is located in the screen area of the first display unit 310, a corresponding object (or data) is added to the screen image of the first display unit 310 or the second display unit 330 as illustrated in diagram 907.

More specifically, the controller 400 receives an input for moving an item from the clipboard area 500 to the screen area of the first display unit 310 or the second display unit 330 that displays a screen image. For example, when the mobile device user selects an item in the region 510 forming a part of the clipboard area 500 and then moves it in the direction out of the region 510, i.e., toward the screen area of the first display unit 310, the controller 400 receives a corresponding input signal. Thereafter, the controller 400 calls an object (or data) corresponding to an item from the storage unit 200, and then adds (i.e., pastes) it to the screen image (or application). The called object (or data) may be added to the screen image (or application) according to its type. For example, when the object corresponding to an item is a string, the string may be added (i.e., pasted) to the position on the screen image to which the user's gesture is created. When the object is data (e.g., a content file), the data is added (or pasted or attached) to the position on the screen image to which the user's gesture is created.

Although not illustrated in FIG. 9, an item corresponding to the added (i.e., pasted) object (or data) may be retained in the clipboard area 500 or removed therefrom at the time point when it is added (i.e., pasted), according to the settings. When a corresponding item is retained in the clipboard area 500, the real object (or data) corresponding to the item is kept in the storage unit 200. On the contrary, when a corresponding item is removed from the clipboard area 500, the real object (or data) corresponding to the item is also removed from the storage unit 200.

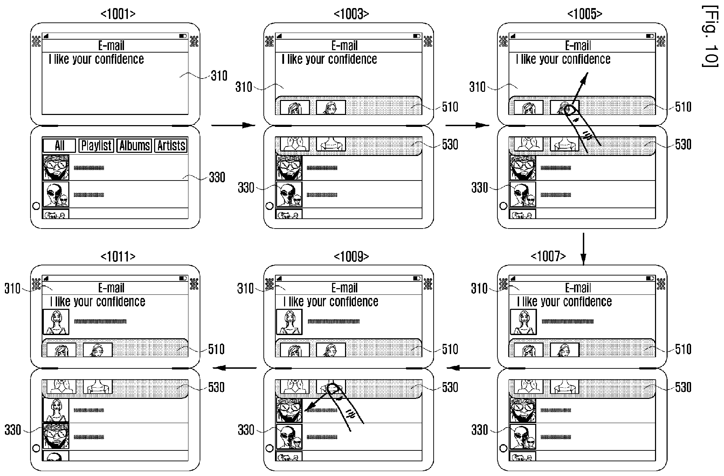

FIG. 10 illustrates screens describing a method for providing a clipboard function in a landscape mode using dual display units of a mobile device, according to an exemplary embodiment of the present invention.

Referring to FIG. 10, as illustrated in diagram 1001, it is assumed that the first and second display units 310 and 330 display different screen images according to the execution of different applications respectively. For example, the first display unit 310 displays a screen image for an email transmission function according to the execution of an email application. In addition, the second display unit 330 displays a screen image showing a content list according to the execution of a content application.

When the mobile device operates as illustrated in diagram 1001, it may perform a clipboard function. When an input for executing a clipboard function occurs, the first and second display units 310 and 330 display the regions 510 and 530 respectively, as illustrated in diagram 1003. That is, the region 510 of the first display unit 310 and the region 530 of the second display unit 330 associate with each other to serve as one overall clipboard area 500. In this case, it is assumed that an item corresponding to at least one object (or data) is registered (or copied) in the clipboard area 500.

When the mobile device operates as illustrated in diagram 1003, the user can input a gesture for adding (i.e., pasting) an object (or data) corresponding to an item in the clipboard area 500 to an application (or screen image) that is currently executed. For example, as illustrated in diagram 1005, the user selects an item on the region 510 of the first display unit 310 and gestures to move it toward the screen area on the first display unit 310. When the user inputs a gesture to move the selected item out of the region 510 toward the screen area of the first display unit 310, the object (or data) corresponding to the item is added to the screen image of the first display unit 310 as illustrated in diagram 1007. For example, the first display unit 310 displays a screen image to which the real object (or data) corresponding to the item requested for movement to a file attaching field is added, according to an email application executed thereon. Alternatively, the first display unit 310 displays a screen image in which the real string corresponding to the item requested for movement to a body field is copied (i.e., pasted), according to an email application executed thereon.

Likewise, when the mobile device operates as illustrated in diagram 1003 or 1007, the user selects an item on the region 530 of the second display unit 330 and gestures to move it toward the screen area on the second display unit 330 as illustrated in diagram 1009. When the user inputs a gesture to move the selected item out of the region 530 toward the screen area of the second display unit 330, the object (or data) corresponding to the item is added to the screen image of the second display unit 330 as illustrated in diagram 1011. For example, the second display unit 330 displays a screen image illustrating a list to which the real object (or data) corresponding to the item requested for movement is added (i.e., pasted), according to a content list application executed thereon.

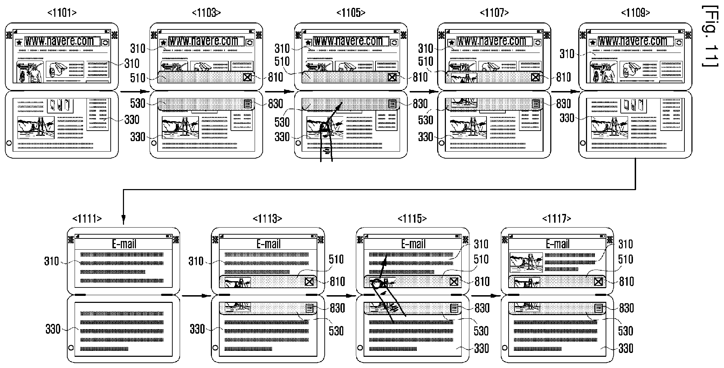

FIG. 11 illustrates screens describing operations of a clipboard function, using dual display units of a mobile device, according to an exemplary embodiment of the present invention.

Referring to FIG. 11, as illustrated in diagram 1101, it is assumed that a screen image according to the execution of an application, for example, a screen image connected to the Internet via a preset service provider's browser, is displayed on the first and second display units 310 and 330 in a landscape mode. Since diagrams 1103 to 1107 illustrate the operations for registering an item in the clipboard area 500 which are described above, a detailed explanation thereof will be omitted.

When the mobile device operates as illustrated in diagram 1107, executing a closing soft key button 810 closes the clipboard area 500. That is, when the closing soft key button 810 is touched, the clipboard area 500 is removed from the first and second display units 310 and 330 as illustrated in diagram 1109. In this case, the first and second display units 310 and 330 display a screen image without showing the regions 510 and 530 forming the clipboard area 500.

When the mobile device operates as illustrated in diagram 1109, a new application may be executed, and a corresponding screen image is then displayed on as least one of the first and second display units 310 and 330 in a preset mode. For example, when the user executes an email application as illustrated in diagram 1111, the mobile device associates the first and second display units 310 and 330 with each other to serve as one larger overall screen and displays a corresponding screen image thereon. The screen image according to the execution of an email application, for example, an email writing screen image, may be displayed on at least one of the first and second display units 310 and 330 according to a default option set in the mobile device or a user's setting, or may be displayed on one larger overall screen formed as the first and second display units 310 and 330 associated with each other as illustrated in diagram 1111.

When the mobile device operates as illustrated in diagram 1111, inputting a command for opening a clipboard area displays a clipboard area 500 on the first and second display units 310 and 330 as illustrated in diagram 1113. In this case, the clipboard area 500 includes the items registered via the operations illustrated in diagrams 1101 to 1107.

When the mobile device operates as illustrated in diagram 1113, the user can input a gesture for adding (i.e., pasting) an item in the clipboard area 500 to an application (or screen image) that is currently executed. For example, as illustrated in diagram 1115, the user selects an item on the region 510 of the first display unit 310 and gestures to move it toward the screen area on the first display unit 310. When the user inputs a gesture to move the selected item out of the region 510 toward the screen area of the first display unit 310, the object (or data) corresponding to the item is added to the screen image of the first display unit 310 as illustrated in diagram 1117. For example, an item acquired via the Internet screen image, illustrated in diagrams 1101 to 1107, appears on the screen image illustrated as an email application is currently executed on the dual display units 310, 330. As illustrated in diagram 1117, the dual display units 310, 330 display a screen image where a real object (or data) corresponding to an item is added (i.e., pasted) in the file attaching field, according to an email application. Alternatively, the dual display units 310, 330 display a screen image of an email application where a real string corresponding to an item is added (i.e., pasted) in the body field, according to the types of objects corresponding to the items registered in the clipboard area 500.

When the mobile device operates as illustrated in diagram 1117, the user can transmit an email with the object (or data) corresponding to the added items, by executing the email application, such as a transmitting function.

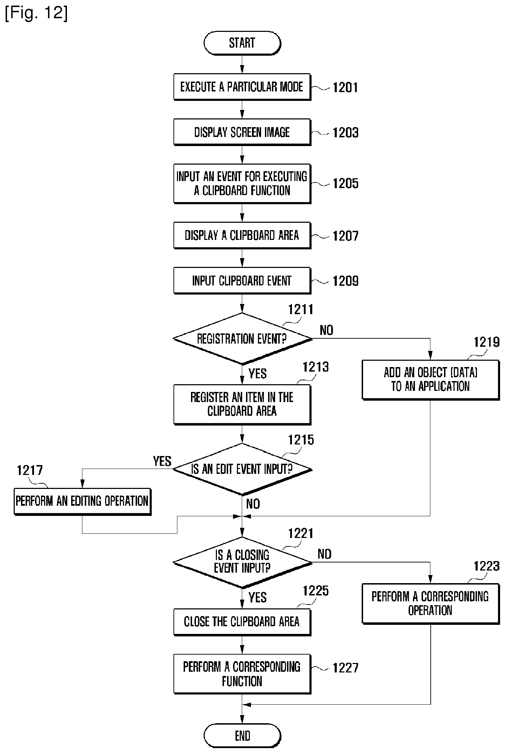

FIG. 12 illustrates a flowchart describing a method for controlling a clipboard function using dual display units of a mobile device, according to an exemplary embodiment of the present invention.

Referring to FIG. 12, the controller 400 operates the mobile device in a particular mode at step 1201 and displays a corresponding screen image on at least one of the first and second display units 310 and 330 at step 1203. During this process, the controller 400 may detect an event for executing a clipboard function at step 1205. For example, the controller 400 can perform a particular mode where the first and second display units 310 and 330 are turned on and at least one application is executed according to a user's request. In this mode, the controller 400 may display a screen image on the first and second display units 310 and 330 respectively. The controller 400 may display one screen image on one larger overall screen formed as the first and second display units 310 and 330 associate with each other. Alternatively, the controller 400 may display two different screen images on the first and second display units 310 and 330 respectively. While the controller 400 is displaying a screen image on the first and second display units 310 and 330, it can detect an event for executing a clipboard function. The detection of the event can be performed when the user operates a shortcut key button 550 of the input unit 100, installed on the main body or touches a touch area 580 for executing a clipboard function on one of the first and second display units 310 and 330. That is, the controller 400 can receive an input signal corresponding to the user's created event.

When the controller 400 detected the user's created event at step 1205, it opens the clipboard area 500 at step 1207. The controller 400 associates the region 510 of the first display unit 310 with the region 530 of the second display unit 330 to provide one overall clipboard area 500. The controller 400 displays the regions 510 and 530 forming the clipboard area 500 on the images on the dual display units 310, 330 respectively. When the controller 400 opens the clipboard area 500, it can determine whether there is an item that was previously registered (i.e., copied) in the clipboard area 500. If it is determined that there is at least one item that was previously registered (i.e., copied) in the clipboard area 500, the controller 400 can display it on the clipboard area 500.

When the controller 400 displays the clipboard area 500 at step 1207, it receives a gesture corresponding to a clipboard event at step 1209. In an exemplary embodiment of the present invention, the clipboard event may be divided into a registration event and an addition event. The registration event refers to a gesture to register (i.e., copy) an object (or data) in the clipboard area 500. The addition event refers to a gesture to add (i.e., paste) an item corresponding to an object (or data), registered (i.e., copied) in the clipboard area 500, to an application (or a screen image) that is executed. It should be understood, for convenience of description, that the terminology 'events' are distinguished between the clipboard event, the registration event, and the addition event. When the clipboard area 500 open on the dual display units 310, 330, the user may selectively input the registration event or the addition event therein. When the user gestures to create a clipboard event, the controller 400 receives an input signal corresponding thereto.

When the controller 400 detects the clipboard event at step 1209, it identifies the type of clipboard event, i.e., it determines whether the clipboard event is the registration event or the addition event at step 1211.

On the contrary, if it is determined that the clipboard event is a registration event at step 1211, the controller 400 registers (i.e., copies) an item corresponding to the selected object (or data) in the clipboard area 500 at step 1213. The controller 400 can create an item corresponding to the selected object (or data) according to the registration event. Thereafter, the controller 400 registers (i.e., copies) the created item in the clipboard area 500, and then displays it thereon. In addition, the controller 400 can also store a real object (or data) of the registered (i.e., copied) item in a storage area for a clipboard function, allocated to the storage unit 200.

Thereafter, the controller 400 determines whether an edit event occurs at step 1215. If it is determined that an edit event occurred at step 1215, the controller 400 performs an edit operation at step 1217. Otherwise, it further determines whether a closing event occurs at step 1221. For example, when the user operates a list viewing soft key button 830 on the clipboard area 500, the controller 400 displays a list view screen image on at least one of the first and second display units 310 and 330. While the controller 400 displays the list view screen image, it can allow the user to conduct his/her editing work. For example, the controller 400 can control the editing work, such as the alteration of the order of items registered in the clipboard area 500, the deletion of the items in the clipboard area 500 selectively or collectively, the change of the names of the items in the clipboard area 500, the setting of the long-term storage option, the copy or movement, and the like. In addition, when the user operates the closing soft key button 800 after performing the editing operation, the controller 400 closes the list view screen image and displays a screen image that has been displayed.

On the contrary, if it is determined that the clipboard event is a registration event at step 1211, the controller 400 adds (i.e., pastes) an object (or data) corresponding to the selected item to an application (or its screen image) that is currently executed at step 1219. For example, the controller 400 calls an object (or data) corresponding to an item, selected in the clipboard area 500 according to the addition event, from the storage unit 200. Thereafter, the controller 400 adds (i.e., pastes) the called object (or data) to the application (or its screen image) that is currently executed. The controller 400 can perform an adding (i.e., pasting) operation according to the types of the called object (or data), such as, a character, a string, a content file, and the like.

While the controller 400 controls the operations at step 1215, 1217 or 1219, it can further determine whether a closing event occurs at step 1221. In an exemplary embodiment of the present invention, the closing event refers to an event to close the clipboard area 500. The closing event can be created by operating the closing soft key button 810 on the clipboard area 500.

If it is determined that a closing event does not occur at step 1221, the controller 400 can perform an operation corresponding to a user's request at step 1223. Examples of the user's requested operation are registering (i.e., copying) a new item in the clipboard area, adding (i.e., pasting) an item, registered (i.e., copied) in the clipboard area 500, to a particular application (or its screen image), and the like.

On the contrary, if it is determined that a closing event occurs at step 1221, the controller closes the clipboard area 500 at step 1225 and then performs a function according to a user's request at step 1227. For example, when the user operates the closing soft key button 810 on the clipboard area 500, the controller 400 receives an input signal corresponding thereto and closes the clipboard area 500 on the first and second display units 310 and 330. Thereafter, the controller 400 may execute a new application, register an item corresponding to a new object (or data) in the clipboard area 500, or perform an operation of an application to which an object (or data) corresponding to an item is added, such as email transmission, message transmission, and the like.

Although not illustrated in FIGs. 1 to 12, it should be understood that, when the real object (or data) corresponding to an item, registered (i.e., copied) in the clipboard area 500, is added (pasted) to an application or its screen image, the item in the clipboard area 500 and the real object (or data), stored in the storage area of the storage unit 200 may be retained or removed therefrom. This function can be set according to the default settings or a user's settings.

As described above, the method for displaying screen images on dual display units according to exemplary embodiments of the present invention can be implemented with program commands that can be conducted in various types of computers and recorded in computer-readable recording media. The computer-readable recording media contain program commands, data files, data structures, and the like, or a combination thereof. The program commands recorded in the recording media may be designed or configured to comply with exemplary embodiments of the present invention or may be software well-known to the ordinary skilled person in the art.

The computer-readable recoding media includes hardware systems for storing and conducting program commands. Examples of the hardware systems are magnetic media such as a hard disk, a floppy disk, a magnetic tape, an optical media such as a Compact Disc Read Only Memory (CD-ROM) and a Digital Video Disc (DVD), a Magneto-Optical Media, such as a floptical disk, a ROM, a Random Access Memory (RAM), a flash memory, and the like. The program commands include assembly language or machine code complied by a complier and a higher level language interpreted by an interpreter. The hardware systems may be implemented with at least one software module to comply with exemplary embodiments of the present invention.

While the invention has been shown and described with reference to certain exemplary embodiments thereof, it will be understood by those skilled in the art that various changes in form and details may be made therein without departing from the scope of the invention as defined in the appended claims.

## Claims

1. A method for executing a clipboard function on a mobile device with a dual display unit, the method comprising:
displaying (1203) screen images on at least one of a first display unit (310) and a second display unit (330) according to an execution of an application;
displaying (1207) a clipboard area (500) on the first display unit (310) and the second display unit (330) according to an execution of the clipboard function, where the clipboard area (500) comprises two regions (510, 530), one of said regions (510) allocated to the first display unit (310) and the other of said regions (530) allocated to the second display unit (330), wherein the two regions (510, 530) are located near a boundary between the first display unit (310) and the second display unit (330) and associated with each other respectively for functioning as one overall clipboard area (500);
controlling, in response to received input events, one of registering (1213) an object in the clipboard area (500), said object being displayed on a screen area of the first display unit (310) or the second display unit (330), by copying an item corresponding to said object in the clipboard area (500), thereby displaying the item on the clipboard area (500) on the first and second display units (310, 330) by extending the item over the boundary between them, and adding (1219) an object, corresponding to an item in the clipboard area (500), to the first display unit (310) or the second display unit (330);
displaying a list view screen image (670) comprising a list of items of the clipboard area (500), on at least one of the first display unit (310) and the second display unit (330); and
editing (1217) at least one item, registered in the clipboard area (500), on the list view screen image (670),
wherein the registering (1213) of the object comprises receiving a gesture that selects an object displayed on the first display unit (310) or the second display unit (330) and moves the object to the region (510, 530) of the clipboard area (500) corresponding to the first display unit (310) or the second display unit (330) where the object is selected, and wherein the adding (1219) of the object to the first display unit (310) or the second display unit (330), comprises receiving a gesture to move the item, selected in the region (510, 530) of the clipboard area (500) on the first display unit (310) or the second display unit (330), out of the region (510, 530).

2. The method of claim 1, wherein the registering (1213) of the object further comprises:
creating an item corresponding to the selected object and displaying the item on the clipboard area (500); and
storing the object in a storage area for the clipboard function.

3. The method of claim 1, wherein the displaying of the item on the clipboard area (500) comprises splitting and displaying the created item on the regions (510, 530) of the first display unit (310) and the second display unit (330).

4. The method of claim 1, wherein the adding (1219) of the object further comprises:
calling an object corresponding to the item from the storage area; and
adding the object to the screen image,
wherein the gesture is received from the first display unit (310) or the second display unit (330) that provides a region (510, 530) in which the item is selected.

5. A mobile device with a dual display unit, the mobile device comprising:
a first display unit (310) for displaying a screen image and providing a region (510) forming a first part of a clipboard area (500) when a clipboard function is executed, wherein the first display unit (310) is installed on a first body of the mobile device;
a second display unit (330) for displaying a screen image and providing a region (530) forming a second part of the clipboard area (500) when a clipboard function is executed, wherein the second display unit (330) is installed on a second body of the mobile device wherein the two regions (510, 530) are located near a boundary between the first display unit (310) and the second display unit (330) and associated with each other for functioning as an overall clipboard area (500);
a storage unit (200) for storing an object according to the execution of the clipboard function; and
a controller (400) for, in response to input events, registering an object in the clipboard area (500) or adding an object on the first display unit (310) or the second display unit (330), and displaying a list view screen image (670) comprising a list of items of the clipboard area (500) on at least one of the first display unit (310) and the second display unit (330), and editing at least one item, registered in the clipboard area (500), on the list view screen image (670), wherein the controller (400) is configured to associate said two regions (510, 530) of the first display unit (310) and the second display unit (330) with each other for functioning as said overall clipboard area (500), and control one of registering an object, said object being displayed on a screen area of the first display unit (310) or the second display unit (330), by copying an item corresponding to said object in the clipboard area (500), thereby displaying the item on the clipboard area (500) on the first and second display units (310, 330) by extending the item over the boundary between them, and adding an object, corresponding to an item in the clipboard area (500), to the first display unit (310) or the second display unit (330), and
wherein the registering of the object comprises receiving a gesture that selects an object displayed on the first display unit (310) or the second display unit (330) and moves the object to the region (510, 530) of the clipboard area (500) corresponding to the first display unit (310) or the second display unit (330) where the object is selected and the adding of the object comprises receiving a gesture to move the item, selected in the region (510, 530) of the clipboard area (500) on the first display unit (310) or the second display unit (330), out of the region (510, 530).

6. The mobile device of claim 5, wherein the controller (400) is configured to, when an object is selected on the first display unit (310) or the second display unit (330) and moved to the region (510, 530) corresponding to the first display unit (310) or the second display unit (330) where the object is selected, split and display the created item on the regions (510, 530) of the first display unit (310) and the second display unit (330).

7. The mobile device of claim 5, wherein the controller (400) is configured to store, when an item is copied in the clipboard area (500), the object corresponding to the item in the storage unit, and call, when an object corresponding to an item in the clipboard area (500) is added, the object corresponding to the item from the storage unit.

8. The mobile device of claim 5, wherein the clipboard area (500) comprises:
a soft key button (830) for viewing a list; and
a soft key button (810) for closing the clipboard area (500).

9. The mobile device of claim 8, wherein the controller (400) is configured to receive an input signal corresponding to the operation of the list view soft key button (830) and in response thereto display a list view screen image (670) on at least one of the first display unit (310) and the second display unit (330); and
the controller (400) is configured to receive an input signal corresponding to the operation of the closing soft key button (830) and in response thereto close the regions (510, 530) of the first display unit (310) and the second display unit (330).

10. The mobile device of claim 5, wherein:
one of the first display unit (310) and the second display unit (330) comprises a touch area for executing the clipboard function; and
the controller (400) is configured to detect a touch that occurred on the touch area, and open the clipboard area (500).

11. The mobile device of claim 5, further comprising:
an input unit for receiving a signal that one of opens and closes the clipboard area (500).

## Patentansprüche

1. Verfahren zum Ausführen einer Zwischenablagefunktion auf einer mobilen Vorrichtung mit einer dualen Anzeigeeinheit, wobei das Verfahren Folgendes umfasst:
Anzeigen (1203) von Bildschirmbildern auf einer ersten Anzeigeeinheit (310) und/oder einer zweiten Anzeigeeinheit (330) gemäß einer Ausführung einer Anwendung;
Anzeigen (1207) eines Zwischenablagebereichs (500) auf der ersten Anzeigeeinheit (310) und der zweiten Anzeigeeinheit (330) gemäß einer Ausführung der Zwischenablagefunktion, wobei der Zwischenablagebereich (500) zwei Bereiche (510, 530) umfasst, wobei einer der besagten Bereiche (510) der ersten Anzeigeeinheit (310) zugeordnet ist und der andere der besagten Bereiche (530) der zweiten Anzeigeeinheit (330) zugeordnet ist, wobei sich die beiden Bereiche (510, 530) nahe einer Grenze zwischen der ersten Anzeigeeinheit (310) und der zweiten Anzeigeeinheit (330) befinden und jeweils miteinander assoziiert sind, um als ein Gesamtzwischenablagebereich (500) zu funktionieren;
Steuern des Registrierens (1213) eines Objekts in dem Zwischenablagebereich (500) als Antwort auf empfangene Eingabeereignisse, wobei das besagte Objekt auf einem Bildschirmbereich der ersten Anzeigeeinheit (310) oder der zweiten Anzeigeeinheit (330) angezeigt wird, durch Kopieren eines Elements, das dem besagten Objekt entspricht, in dem Zwischenablagebereich (500), wodurch das Element in dem Zwischenablagebereich (500) auf der ersten und zweiten Anzeigeeinheit (310, 330) durch Ausweiten des Elements über die Grenze zwischen ihnen angezeigt wird, oder des Hinzufügens (1219) eines Objekts, das einem Element in dem Zwischenablagebereich (500) entspricht, zu der ersten Anzeigeeinheit (310) oder der zweiten Anzeigeeinheit (330);
Anzeigen eines Listenansichtsbildschirmbildes (670), das eine Liste von Elementen des Zwischenablagebereichs (500) umfasst, auf der ersten Anzeigeeinheit (310) und/oder der zweiten Anzeigeeinheit (330); und
Bearbeiten (1217) mindestens eines Elements, das in dem Zwischenablagebereich (500) registriert ist, auf dem Listenansichtsbildschirmbild (670),
wobei das Registrieren (1213) des Objekts das Empfangen einer Geste umfasst, die ein Objekt, das auf der ersten Anzeigeeinheit (310) oder der zweiten Anzeigeeinheit (330) angezeigt wird, auswählt und das Objekt in den Bereich (510, 530) des Zwischenablagebereichs (500) bewegt, der der ersten Anzeigeeinheit (310) oder der zweiten Anzeigeeinheit (330) entspricht, wo das Objekt ausgewählt wird, und wobei das Hinzufügen (1219) des Objekts zu der ersten Anzeigeeinheit (310) oder der zweiten Anzeigeeinheit (330) das Empfangen einer Geste umfasst, um das Element, das in dem Bereich (510, 530) des Zwischenablagebereichs (500) auf der ersten Anzeigeeinheit (310) oder der zweiten Anzeigeeinheit (330) ausgewählt wird, aus dem Bereich (510, 530) zu bewegen.

2. Verfahren nach Anspruch 1,
wobei das Registrieren (1213) des Objekts ferner Folgendes umfasst:
Erzeugen eines Elements, das dem ausgewählten Objekt entspricht, und Anzeigen des Elements auf dem Zwischenablagebereich (500); und
Speichern des Objekts in einem Speicherbereich für die Zwischenablagefunktion.

3. Verfahren nach Anspruch 1, wobei das Anzeigen des Elements auf dem Zwischenablagebereich (500) das Aufteilen und Anzeigen des erzeugten Elements auf den Bereichen (510, 530) der ersten Anzeigeeinheit (310) und der zweiten Anzeigeeinheit (330) umfasst.

4. Verfahren nach Anspruch 1, wobei das Hinzufügen (1219) des Objekts ferner Folgendes umfasst:
Aufrufen eines Objekts, das dem Element aus dem Speicherbereich entspricht; und
Hinzufügen des Objekts zu dem Bildschirmbild,
wobei die Geste von der ersten Anzeigeeinheit (310) oder der zweiten Anzeigeeinheit (330) empfangen wird, die einen Bereich (510, 530) bereitstellt, in dem das Element ausgewählt wird.

5. Mobile Vorrichtung mit einer dualen Anzeigeeinheit, wobei die mobile Vorrichtung Folgendes umfasst:
eine erste Anzeigeeinheit (310) zum Anzeigen eines Bildschirmbildes und Bereitstellen eines Bereichs (510), der einen ersten Teil eines Zwischenablagebereichs (500) bildet, wenn eine Zwischenablagefunktion ausgeführt wird, wobei die erste Anzeigeeinheit (310) an einem ersten Körper der mobilen Vorrichtung installiert ist;
eine zweite Anzeigeeinheit (330) zum Anzeigen eines Bildschirmbildes und Bereitstellen eines Bereichs (530), der einen zweiten Teil des Zwischenablagebereichs (500) bildet, wenn eine Zwischenablagefunktion ausgeführt wird, wobei die zweite Anzeigeeinheit (330) an einem zweiten Körper der mobilen Vorrichtung installiert ist, wobei sich die beiden Bereiche (510, 530) nahe einer Grenze zwischen der ersten Anzeigeeinheit (310) und der zweiten Anzeigeeinheit (330) befinden und miteinander assoziiert sind, um als ein Gesamtzwischenablagebereich (500) zu funktionieren;
eine Speichereinheit (200) zum Speichern eines Objekts gemäß der Ausführung der Zwischenablagefunktion; und
eine Steuerung (400) zum, als Antwort auf Eingabeereignisse, Registrieren eines Objekts in dem Zwischenablagebereich (500) oder Hinzufügen eines Objekts auf der ersten Anzeigeeinheit (310) oder der zweiten Anzeigeeinheit (330), und Anzeigen eines Listenansichtsbildschirmbildes (670), das eine Liste von Elementen des Zwischenablagebereichs (500) umfasst, auf der ersten Anzeigeeinheit (310) und/oder der zweiten Anzeigeeinheit (330), und Bearbeiten mindestens eines Elements, das in dem Zwischenablagebereich (500) registriert ist, auf dem Listenansichtsbildschirmbild (670), wobei die Steuerung (400) konfiguriert ist, um die besagten beiden Bereiche (510, 530) der ersten Anzeigeeinheit (310) und der zweiten Anzeigeeinheit (330) miteinander zu assoziieren, um als der besagte Gesamtzwischenablagebereich (500) zu funktionieren, und Steuern des Registrierens eines Objekts, wobei das besagte Objekt auf einem Bildschirmbereich der ersten Anzeigeeinheit (310) oder der zweiten Anzeigeeinheit (330) angezeigt wird, durch Kopieren eines Elements, das dem besagten Objekt entspricht, in dem Zwischenablagebereich (500), wodurch das Element auf dem Zwischenablagebereich (500) auf der ersten und zweiten Anzeigeeinheit (310, 330) angezeigt wird, durch Ausweiten des Elements über die Grenze zwischen ihnen, oder des Hinzufügens eines Objekts, das einem Element in dem Zwischenablagebereich (500) entspricht, zu der ersten Anzeigeeinheit (310) oder der zweiten Anzeigeeinheit (330), und
wobei das Registrieren des Objekts das Empfangen einer Geste umfasst, die ein Objekt, das auf der ersten Anzeigeeinheit (310) oder der zweiten Anzeigeeinheit (330) angezeigt wird, auswählt und das Objekt in den Bereich (510, 530) des Zwischenablagebereichs (500) bewegt, der der ersten Anzeigeeinheit (310) oder der zweiten Anzeigeeinheit (330) entspricht, wo das Objekt ausgewählt wird, und das Hinzufügen des Objekts das Empfangen einer Geste umfasst, um das Element, das in dem Bereich (510, 530) des Zwischenablagebereichs (500) auf der ersten Anzeigeeinheit (310) oder der zweiten Anzeigeeinheit (330) ausgewählt wird, aus dem Bereich (510, 530) zu bewegen.

6. Mobile Vorrichtung nach Anspruch 5, wobei die Steuerung (400) konfiguriert ist, um, wenn ein Objekt auf der ersten Anzeigeeinheit (310) oder der zweiten Anzeigeeinheit (330) ausgewählt wird und in den Bereich (510, 530) bewegt wird, der der ersten Anzeigeeinheit (310) oder der zweiten Anzeigeeinheit (330) entspricht, wo das Objekt ausgewählt wird, das erzeugte Element auf den Bereichen (510, 530) der ersten Anzeigeeinheit (310) und der zweiten Anzeigeeinheit (330) aufzuteilen und anzuzeigen.

7. Mobile Vorrichtung nach Anspruch 5, wobei die Steuerung (400) konfiguriert ist, um, wenn ein Element in dem Zwischenablagebereich (500) kopiert wird, das Objekt, das dem Element entspricht, in der Speichereinheit zu speichern und, wenn ein Objekt hinzugefügt wird, das einem Element in dem Zwischenablagebereich (500) entspricht, das Objekt, das dem Element entspricht, aus der Speichereinheit aufzurufen.

8. Mobile Vorrichtung nach Anspruch 5, wobei der Zwischenablagebereich (500) Folgendes umfasst:
eine Softkey-Taste (830) zum Anzeigen einer Liste; und
eine Softkey-Taste (810) zum Schließen des Zwischenablagebereichs (500).

9. Mobile Vorrichtung nach Anspruch 8, wobei die Steuerung (400) konfiguriert ist, um ein Eingabesignal zu empfangen, das der Betätigung der Listenansicht-Softkey-Taste (830) entspricht, und als Reaktion darauf ein Listenansichtsbildschirmbild (670) auf der ersten Anzeigeeinheit (310) und/oder der zweiten Anzeigeeinheit (330) anzuzeigen; und
die Steuerung (400) konfiguriert ist, um ein Eingabesignal zu empfangen, das der Betätigung der schließenden Softkey-Taste (830) entspricht, und als Reaktion darauf die Bereiche (510, 530) der ersten Anzeigeeinheit (310) und der zweiten Anzeigeeinheit (330) zu schließen.

10. Mobile Vorrichtung nach Anspruch 5, wobei:
die erste Anzeigeeinheit (310) oder die zweite Anzeigeeinheit (330) einen Berührungsbereich zum Ausführen der Zwischenablagefunktion umfasst; und
die Steuerung (400) konfiguriert ist, um eine Berührung zu erkennen, die auf dem Berührungsbereich aufgetreten ist, und den Zwischenablagebereich (500) zu öffnen.

11. Mobile Vorrichtung nach Anspruch 5, die ferner Folgendes umfasst:
eine Eingabeeinheit zum Empfangen eines Signals, das den Zwischenablagebereich (UU) öffnet oder schließt.

## Revendications

1. Procédé pour exécuter une fonction de presse-papiers sur un dispositif mobile ayant une unité d'affichage double, le procédé comprenant :
afficher (1203) des images d'écran sur au moins l'une d'une première unité d'affichage (310) et d'une deuxième unité d'affichage (330) selon une exécution d'une application ;
afficher (1207) une zone de presse-papiers (500) sur la première unité d'affichage (310) et la deuxième unité d'affichage (330) selon une exécution de la fonction de presse-papiers, la zone de presse-papiers (500) comprenant deux régions (510, 530), l'une desdites régions (510) attribuée à la première unité d'affichage (310) et l'autre desdites régions (530) attribuée à la deuxième unité d'affichage (330), où les deux régions (510, 530) sont situées à proximité d'une limite entre la première unité d'affichage (310) et la deuxième unité d'affichage (330) et associées l'une à l'autre respectivement pour fonctionner comme une zone de presse-papiers globale (500) ;
commander, en réponse à des événements d'entrée reçus, l'enregistrement (1213) d'un objet dans la zone de presse-papiers (500), ledit objet étant affiché sur une zone d'écran de la première unité d'affichage (310) ou de la deuxième unité d'affichage (330), en copiant un article correspondant audit objet dans la zone de presse-papiers (500), affichant ainsi l'article sur la zone de presse-papiers (500) sur les première et deuxième unités d'affichage (310, 330) en étendant l'article au-delà de la limite entre elles, et ajouter (1219) un objet, correspondant à un article dans la zone de presse-papiers (500), à la première unité d'affichage (310) ou à la deuxième unité d'affichage (330);
afficher une image d'écran de visualisation de liste (670) comprenant une liste d'articles de la zone de presse-papiers (500), sur au moins l'une de la première unité d'affichage (310) et de la deuxième unité d'affichage (330) ; et
éditer (1217) au moins un article, enregistré dans la zone de presse-papiers (500), sur l'image d'écran de visualisation de liste (670),
où l'enregistrement (1213) de l'objet comprend la réception d'un geste qui sélectionne un objet affiché sur la première unité d'affichage (310) ou la deuxième unité d'affichage (330) et déplace l'objet vers la région (510, 530) de la zone de presse-papiers (500) correspondant à la première unité d'affichage (310) ou à la deuxième unité d'affichage (330) où l'objet est sélectionné, et où l'ajout (1219) de l'objet à la première unité d'affichage (310) ou à la deuxième unité d'affichage (330) comprend la réception d'un geste pour déplacer l'article, sélectionné dans la région (510, 530) de la zone de presse-papiers (500) sur la première unité d'affichage (310) ou la deuxième unité d'affichage (330), hors de la région (510, 530).

2. Procédé selon la revendication 1,
où l'enregistrement (1213) de l'objet comprend en outre :
créer un article correspondant à l'objet sélectionné et afficher l'article sur la zone de presse-papiers (500) ; et
stocker l'objet dans une zone de stockage pour la fonction presse-papiers.

3. Procédé selon la revendication 1, où l'affichage de l'article sur la zone de presse-papiers (500) comprend le fractionnement et l'affichage de l'article créé sur les régions (510, 530) de la première unité d'affichage (310) et de la deuxième unité d'affichage (330).

4. Procédé selon la revendication 1, où l'ajout (1219) de l'objet comprend en outre :
appeler un objet correspondant à l'article depuis la zone de stockage ; et
ajouter l'objet à l'image de l'écran,
où le geste est reçu de la première unité d'affichage (310) ou de la deuxième unité d'affichage (330) qui fournit une région (510, 530) où l'article est sélectionné.

5. Dispositif mobile avec une unité d'affichage double, le dispositif mobile comprenant :
une première unité d'affichage (310) pour afficher une image d'écran et fournir une région (510) formant une première partie d'une zone de presse-papiers (500) lorsqu'une fonction de presse-papiers est exécutée, où la première unité d'affichage (310) est installée sur un premier corps du dispositif mobile ;
une deuxième unité d'affichage (330) pour afficher une image d'écran et fournir une région (530) formant une deuxième partie de la zone de presse-papiers (500) lorsqu'une fonction de presse-papiers est exécutée, où la deuxième unité d'affichage (330) est installée sur un deuxième corps du dispositif mobile où les deux régions (510, 530) sont situées à proximité d'une limite entre la première unité d'affichage (310) et la deuxième unité d'affichage (330) et associées l'une à l'autre pour fonctionner comme une zone de presse-papiers globale (500) ;
une unité de stockage (200) pour stocker un objet selon l'exécution de la fonction presse-papiers ; et
un contrôleur (400) pour, en réponse à des événements d'entrée, enregistrer un objet dans la zone de presse-papiers (500) ou ajouter un objet sur la première unité d'affichage (310) ou la deuxième unité d'affichage (330), et afficher une image d'écran de visualisation de liste (670) comprenant une liste d'articles de la zone de presse-papiers (500) sur au moins l'une de la première unité d'affichage (310) et de la deuxième unité d'affichage (330), et éditer au moins un article, enregistré dans la zone de presse-papiers (500), sur l'image d'écran de visualisation de liste (670), où le contrôleur (400) est configuré pour associer lesdites deux régions (510, 530) de la première unité d'affichage (310) et de la deuxième unité d'affichage (330) l'une à l'autre pour fonctionner comme ladite zone de presse-papiers globale (500), et commande d'enregistrer un objet, ledit objet étant affiché sur une zone d'écran de la première unité d'affichage (310) ou de la deuxième unité d'affichage (330), en copiant un article correspondant audit objet dans la zone de presse-papiers (500), affichant ainsi l'article sur la zone de presse-papiers (500) sur les première et deuxième unités d'affichage (310, 330) en étendant l'article au-delà de la limite entre eux, et ajouter un objet, correspondant à un article dans la zone de presse-papiers (500), à la première unité d'affichage (310) ou à la deuxième unité d'affichage (330), et
où l'enregistrement de l'objet comprend la réception d'un geste qui sélectionne un objet affiché sur la première unité d'affichage (310) ou la deuxième unité d'affichage (330) et déplace l'objet vers la région (510, 530) de la zone de presse-papiers (500) correspondant à la première unité d'affichage (310) ou à la deuxième unité d'affichage (330) où l'objet est sélectionné et l'ajout de l'objet comprend la réception d'un geste pour déplacer l'article, sélectionné dans la région (510, 530) de la zone de presse-papiers (500) sur la première unité d'affichage (310) ou la deuxième unité d'affichage (330), en dehors de la région (510, 530).

6. Dispositif mobile selon la revendication 5, où le contrôleur (400) est configuré pour, lorsqu'un objet est sélectionné sur la première unité d'affichage (310) ou la deuxième unité d'affichage (330) et déplacé vers la région (510, 530) correspondant à la première unité d'affichage (310) ou à la deuxième unité d'affichage (330) où l'objet est sélectionné, diviser et afficher l'article créé sur les régions (510, 530) de la première unité d'affichage (310) et de la deuxième unité d'affichage (330).

7. Dispositif mobile selon la revendication 5, où le contrôleur (400) est configuré pour stocker, lorsqu'un article est copié dans la zone de presse-papiers (500), l'objet correspondant à l'article dans l'unité de stockage, et appeler, lorsqu'un objet correspondant à un article dans la zone de presse-papiers (500) est ajouté, l'objet correspondant à l'article de l'unité de stockage.

8. Dispositif mobile selon la revendication 5, où la zone de presse-papiers (500) comprend :
un bouton de touche programmable (830) pour afficher une liste ; et
un bouton de touche programmable (810) pour fermer la zone de presse-papiers (500).

9. Dispositif mobile selon la revendication 8, où le contrôleur (400) est configuré pour recevoir un signal d'entrée correspondant à l'actionnement du bouton de touche programmable (830) d'affichage de liste et en réponse à celui-ci afficher une image d'écran de visualisation de liste (670) sur au moins l'une de la première unité d'affichage (310) et de la deuxième unité d'affichage (330) ; et
le contrôleur (400) est configuré pour recevoir un signal d'entrée correspondant à l'actionnement du bouton de touche programmable de fermeture (830) et en réponse à celui-ci fermer les régions (510, 530) de la première unité d'affichage (310) et de la deuxième unité d'affichage (330).

10. Dispositif mobile selon la revendication 5, où :
l'une de la première unité d'affichage (310) et de la deuxième unité d'affichage (330) comprend une zone tactile pour exécuter la fonction de presse-papiers ; et
le contrôleur (400) est configuré pour détecter un contact qui s'est produit sur la zone tactile, et ouvrir la zone de presse-papiers (500).

11. Dispositif mobile selon la revendication 5, comprenant en outre :
une unité d'entrée pour recevoir un signal qui ouvre et ferme la zone de presse-papiers (500).
